Europäisches Patentamt

(19) European Patent Office

Office européen des brevets

(11) Numéro de publication: **0 056 912**
A1

## (12) DEMANDE DE BREVET EUROPEEN

(21) Numéro de dépôt: 81400982.5

(22) Date de dépôt: 18.06.81

(51) Int. Cl.³: **B 65 G 17/06**

(30) Priorité: 20.01.81 FR 8100951

(43) Date de publication de la demande:
04.08.82 Bulletin 82/31

(84) Etats contractants désignés:
AT BE CH DE FR GB LI NL SE

(71) Demandeur: TISSMETAL LIONEL-DUPONT
138 boulevard de la Croix-Rousse
F-69001 Lyon(FR)

(72) Inventeur: Leclancher, Charles Guy
38 rue du Regard
F-94360 Bry-sur-Marne Val-de-Marne(FR)

(74) Mandataire: Casanova, André et al,
CABINET ARMENGAUD JEUNE CASANOVA,
AKERMAN, LEPEUDRY 23 boulevard de Strasbourg
F-75010 Paris(FR)

(54) Convoyeur à palettes de manutention et/ou de tri de colis et bagages.

(57) Les palettes sont entraînées par une chaîne (10) équipée de galets de guidage (15, 16) et comprennent chacune au moins une écaille (23) en un matériau rigide, dont une partie plane est flexible par rapport à un support (9) sur lequel l'écaille (9) est montée. Chaque écaille (23) ne recouvre partiellement et selon une surface variable qu'un seul support (9), qui peut être un support (9) adjacent à celui portant l'écaille (23) considérée.

Application au transport et au tri de colis et bagages, notamment dans les gares et aéroports au moyen d'un tablier horizontal ou incliné pour tourner monter ou descendre sans discontinuité

Croydon Printing Company Ltd

Convoyeur à palettes de manutention et/ou de tri de colis et bagages. ------------

La présente invention concerne les convoyeurs de manutention et/ou de tri de colis et bagages, du type dit "à palettes", c'est-à-dire comprenant une suite continue de palettes, dont chacune comprend au moins une écaille, essentiellement plane, montée sur un support,de sorte que le convoyeur soit muni d'un tablier de transport, horizontal ou incliné; susceptible de présenter des courbes au moins dans un plan horizontal, et constitué par un recouvrement partiel et selon des surfaces variables des écailles et des supports, pour définir une surface continue et mobile d'entraînement des colis et bagages.

On connaît déjà de nombreux convoyeurs de ce type, dont la suite continue de palettes est entraînée par des moyens de traction tels qu'une chaîne, équipés de moyens de guidage des palettes sur un bâti du convoyeur, les supports des palettes étant d'une part liés au moyen de traction, d'autre part articulés par rapport aux supports des palettes adjacentes, et enfin munis chacun de moyens de déplacement de la palette correspondante sur le bâti.

Sur ces convoyeurs connus, les écailles sont réalisées,par exemple par moulage, en une matière souple, telle que le caoutchouc ou en des matières plastiques telles que les PVC, et elles se recouvrent mutuellement,éventuellement sur plusieurs épaisseurs,dans les courbes du convoyeur.

Comme ces écailles sont souples, le poids des colis et bagages que ces convoyeurs peuvent transporter dans de bonnes conditions est limité, et les tabliers de transport de ces convoyeurs présentent en conséquence une certaine fragilité.

Selon l'invention, on propose de remplacer les écailles en une matière souple par des écailles en une matière rigide, susceptible de supporter des charges plus lourdes.

2

Mais on ne peut plus alors admettre que les écailles viennent à se recouvrir mutuellement, comme cela est le cas dans les dispositifs connus, car cela aurait pour conséquence de provoquer des déformations plastiques des écailles en matière rigide, rendant impropre l'utilisation du convoyeur, dont la surface du tablier ne se présenterait plus comme étant continue, ce qui favoriserait l'arrachement de lanières, poignées et étiquettes des colis et bagages transportés.

Pour éviter un tel recouvrement sans avoir à augmenter considérablement les rayons de courbure du tablier du convoyeur dans ses parties courbes, le convoyeur selon l'invention se caractérise en ce que chaque écaille, réalisée en un matériau rigide, comprend au moins une partie sensiblement plane présentant une certaine flexibilité par rapport au support sur lequel elle est montée, dans une direction sensiblement perpendiculaire à la surface du tablier, et en ce que chaque écaille ne recouvre partiellement et selon une surface variable qu'un seul support, avec sa partie sensiblement plane.

Selon l'invention, le bord libre de cette partie essentiellement plane de l'écaille reste, sur toute la largeur du tablier, qui correspond sensiblement à la dimension transversale de l'écaille par rapport à la direction longitudinale et donc au sens de déplacement du tablier, et pour toute position de l'écaille par rapport au support qu'elle recouvre selon une surface variable, à l'aplomb de ce support, sans venir recouvrir une écaille adjacente.

Selon l'invention, le support recouvert selon une surface variable par au moins une écaille est soit le propre support de cette écaille, soit un support adjacent au(x) support(s) portant cette ou ces écailles.

Dans le premier cas, chaque écaille est, selon l'invention, montée pivotante sur son support autour d'un axe perpendiculaire au tablier de transport, et se trouve positionnée par rapport à son support par un support adjacent à ce dernier.

Dans le second cas, chaque écaille est montée en porte-à-faux sur son support par une liaison de l'une de ses extrémités transversales par rapport au tablier de transport, à une extrémité transversale de son support. Chaque support porte alors une seule écaille, qui recouvre ,selon une surface variable un support adjacent.

Il est également possible que deux écailles soient disposées en porte-à-faux de part et d'autre d'un support sur deux,pris à la suite sur le convoyeur. Dans ce dernier cas, deux écailles en vis à vis , et non portées par le même support recouvrent selon une surface variable des butées planes, participant à la définition du tablier de transport, contre lesquelles les écailles sont susceptibles de prendre appui, les butées étant avantageusement constituées sous la forme de supports, interposés entre deux supports portant chacun deux écailles.

Avantageusement,selon l'invention, le bord libre de chaque écaille est rabattu vers le support qu'elle recouvre, et la liaison entre une écaille et son support est souple.

Dans une forme préférée de réalisation, cette liaison souple est réalisée au moyen d'au moins un plot ou une bande élastique interposé(e) entre les extré- mités transversales liées du support et de l'écaille, ces extrémités étant recourbées sous le tablier de transport et serréees l'une vers l'autre par des moyens de fixation.

Cependant, il faut noter que la liaison de l'écaille sur son support peut être rigide, si la flexibilité de l'écaille est suffisante, ce qui peut être le cas si l'écaille est réalisée en une tôle métallique par exemple. Il est également possible que la flexibilité présentée par l'écaille dans la direction perpendiculaire au tablier de transport soit à la fois procurée pour partie par la souplesse du montage de l'écaille sur son support et par la flexibilité propre de l'écaille.

Dans une autre configuration, selon l'invention, chaque écaille prend appui sur son support par une partie voisine de son extrémité transversale par laquelle l'écaille est liée à son support, cette partie d'appui, fixe par rapport au support de l'écaille, se rattachant par une partie coudée à la partie de l'écaille recouvrant partiellement et selon une surface variable la partie d'appui d'une écaille adjacente. Dans ce cas, la partie d'écaille qui recouvre un support adjacent à son support est seulement montée en porte-à-faux au-delà de l'extrémité de son support opposée à celle sur laquelle l'écaille est fixée.

La caractéristique, propre à l'invention, selon laquelle une écaille ne recouvre qu'un support, permet de plus de faire simultanément basculer latéralement cette écaille et ce support, ce qui augmente les possibilités de tri des colis ou de présentation des bagages transportés par le convoyeur.

Ceci peut être assuré, selon l'invention, par le fait que chaque support est monté tourillonnant autour d'un axe longitudinal et médian d'un porte support entraîné par les moyens de traction du convoyeur, et en ce que chaque écaille est montée en rotation sur ce support autour d'un axe longitudinal et médian venant dans le prolongement de l'axe du tourillon du support qu'elle recouvre partiellement et selon une surface variable, pour pouvoir basculer latéralement avec ce dernier. Avantageusement dans ce cas les basculements latéraux d'au moins un support sont commandés par une rampe à profil continu ou comportant des aiguillages, ménagée sur au moins l'un des côtés ou au dessous du tablier de transport, et sur laquelle roulent des galets de basculement solidaires des supports. On peut ainsi commander sélectivement, sur une zone donnée, le basculement latéral d'un nombre prédéterminé d'écailles.

Dans une forme particulièrement simple de réalisation, chaque écaille est de forme en plan rectangulaire. Cependant, il est également possible qu'une découpe en V soit présentée par chaque écaille vers l'intérieur de l'un des grands côtés du rectangle, correspondant à la largeur du tablier de transport. Inversement, chaque écaille peut présenter une extension en V ou triangulaire vers l'extérieur de l'un des grands côtés du rectangle.

Enfin, pour permettre au tablier de transport de se lever et de descendre, pour lui permettre de s'incliner et de se courber dans un plan horizontal ou incliné ou encore selon une surface sensiblement conique, il est avantageux que d'une façon en soi connue, les moyens de traction soient constitués par une chaîne à cardan.

La présente invention sera mieux comprise à l'aide de la description donnée ci-après de modes particuliers de réalisation, décrits à titre non limitatif en référence aux figures en annexe dans lesquelles :

La figure 1 représente une vue en coupe transversale du convoyeur.

La figure 2 est une vue en coupe longitudinale partielle d'un premier exemple de réalisation.

La figure 3 est une vue en perspective d'un premier type d'écaille associée à son support.

La figure 4 est une vue en plan d'une portion courbe se raccordant à une portion rectiligne d'un convoyeur équipé d'écailles selon la figure 3.

Les figures 5 et 6 sont des vues analogues à la figure 3 pour un second et un troisième type d'écailles associées à leur support.

Les figures 7 et 8 sont des vues analogues à la figure 4 pour des convoyeurs équipés d'écailles selon les figures 5 et 6.

0056912

Les figures 9,10, 11, 12 et 13 sont des vues schématiques analogues à la figure 2 pour un second, un troisième, un quatrième, un cinquième et un sixième exemple de réalisation.

Et la figure 14 est une vue schématique, en perspective, d'un circuit complet de convoyeur.

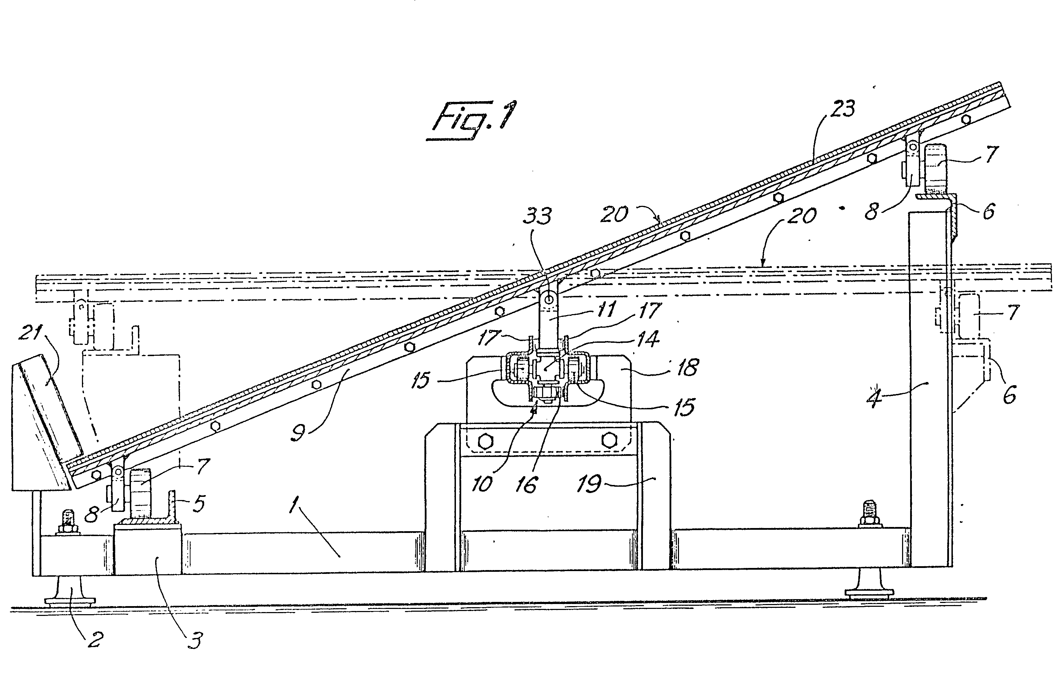

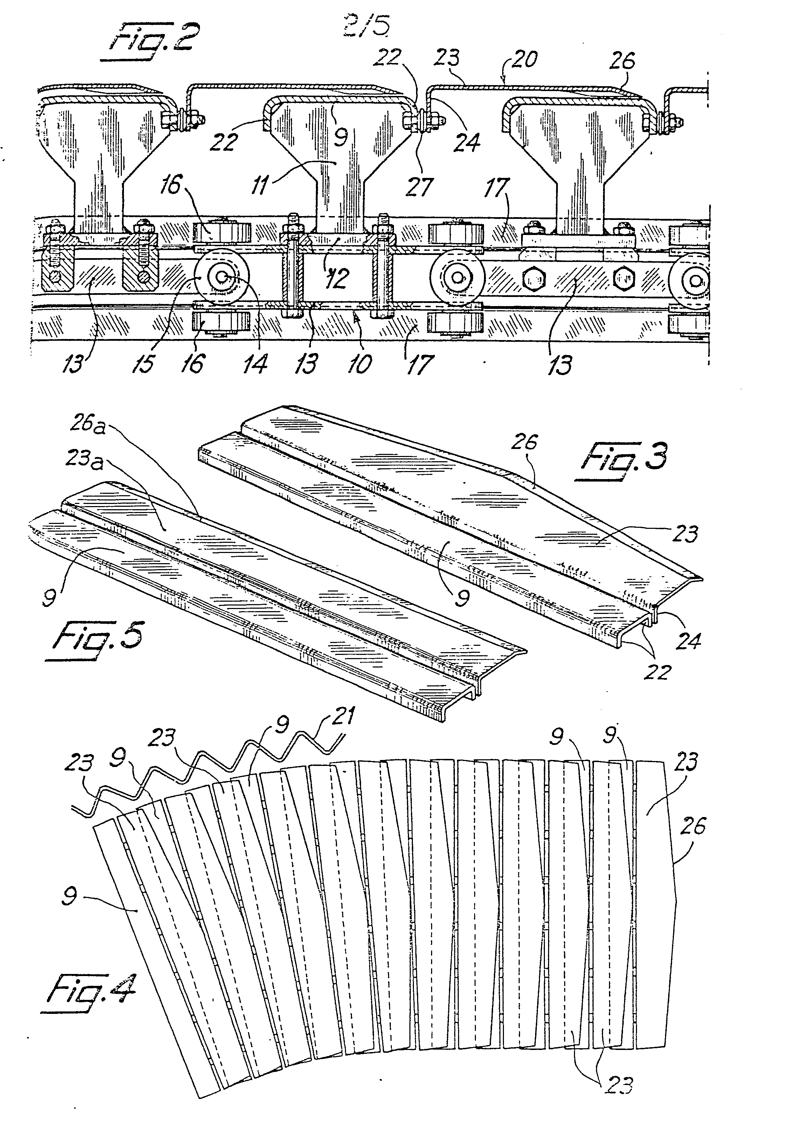

En référence aux figures 1 et 2, le convoyeur comprend un bâti constitué de traverses 1, supportées par des pieds 2, et solidaires de pattes telles que 3 et de montants tels que 4 sur lesquels sont soudés deux rails longitudinaux disposés latéralement 5 et 6, faisant office de chemin de roulement pour des galets de roulement 7, portés à la partie inférieure de pattes latérales 8 dont sont munis chacun des supports 9 d'une suite continue de supports, entraînée sur le bâti par une chaîne 10.

Chaque support 9 est monté sur un porte support 11, muni de préférence d'un plot élastique anti-vibration et anti-bruit (non représenté), et dont le pied 12 est boulonné sur un maillon 13 de la chaîne 10, chaque maillon 13 étant articulé par chacune de ses extrémités sur le maillon 13 adjacent du côté correspondant par un cardan 14, sur les axes duquel sont montées deux paires de galets de guidage 15 et 16, se déplaçant respectivement sur deux paires de chemins de roulement horizontaux et verticaux présentés par deux rails 17 pour assurer respectivement le guidage vertical et le guidage latéral de la chaîne 10.

Les rails 17 sont supportés par des embases 18 montées sur des portiques 19 solidaires des traverses 1.

Une telle chaîne à cardans 10 autorise les montées et les descentes du tablier de transport 20 du convoyeur, ainsi que les courbes dans un plan incliné ou selon une surface sensiblement conique.

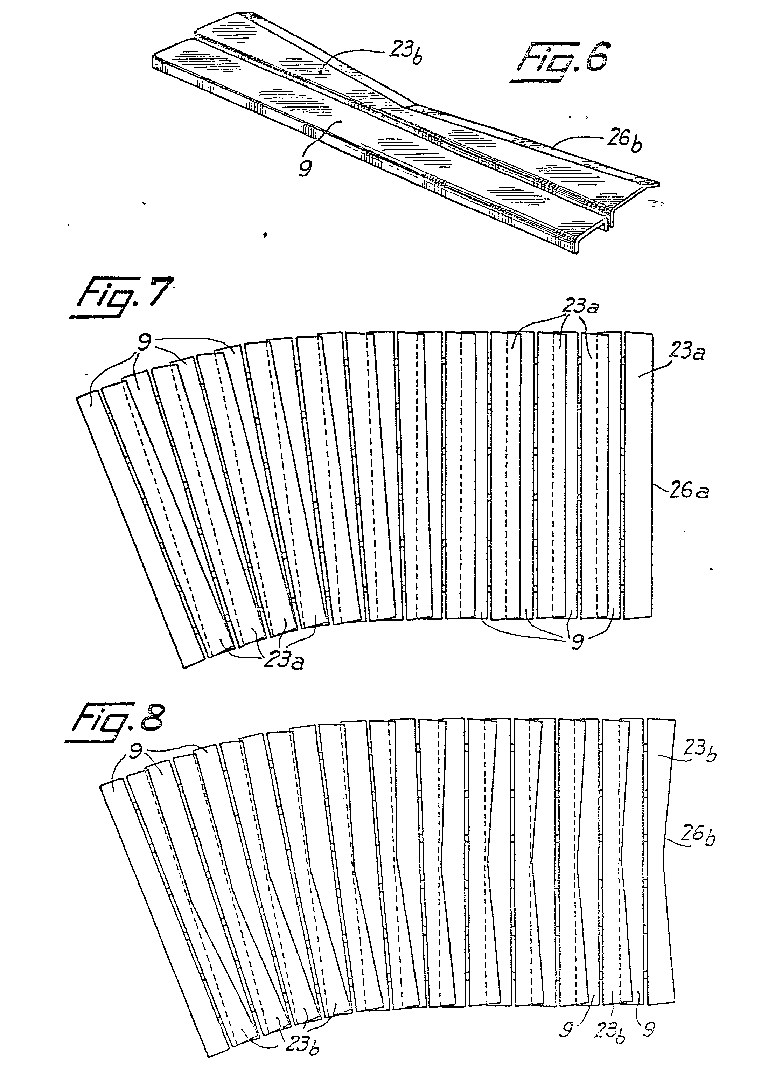

Le tablier de transport 20 du convoyeur est limité, le long de son bord inférieur, dans ses parties inclinées, par une rive 21 qui peut être soit une rive mobile, par exemple du type accordéon (comme représenté sur la figure 4) ou du type constitué de petites écailles liées aux écailles des palettes, comme décrit dans le brevet français N° 72 33535 au nom de la Demanderesse, soit une rive fixe équipée d'éléments facilitant le déplacement des colis et bagages le long de la rive fixe, par exemple des éléments rotatifs tels que des doubles cônes montés en diabolo.

Comme cela apparaît sur les figures 2 à 4, chaque palette est constituée par un support 9, ayant la forme d'une tôle en acier inoxydable rectangulaire, dont les grands côtés, correspondant sensiblement à la largeur du tablier de transport 20 du convoyeur , sont rabattus en 22 de part et d'autre du porte support 11, et par une écaille 23, ayant la forme d'une plaque de plastique dur, de forme rectangulaire, rabattue le long de l'un de ses grands côtés en 24, d'un angle permettant de précontraindre l'écaille 23 vers le support 9 qu'elle recouvre selon une surface variable, et dont l'autre grand côté se prolonge d'une portion de forme triangulaire, dont le bord libre 26 est rabattu du même côté que le côté 24.

L'écaille 23 présentant par elle-même, une certaine flexibilité, du fait de sa partie plane, est montée en porte-à-faux par son côté ou extrémité transversale 24 sur un côté rabattu ou extrémité transversale 22 du support 9, au moyen d'une liaison souple réalisée par des plots élastiques 27 interposés entre les bords rabattus 22 et 24 serrés l'un vers l'autre par des ensembles vis écrous. Comme cela apparaît sur les figures 2 et 4, chaque écaille 23, portée par son support 9, recouvre partiellement et selon une surface variable un support 9 adjacent, en amont ou en aval selon le sens de déplacement du convoyeur. La largeur de la partie rectangulaire et plane de l'écaille 23 et la hauteur de la partie triangulaire qui la prolonge sont telles que le bord libre 26 de l'écaille 23 reste à l'aplomb du support 9, que recouvre partiellement l'écaille 23, quelle que soit la position relative de cette écaille 23 et de ce

8

support 9, le long du trajet parcouru par le tablier de
transport, et qu'en aucun cas ce bord 26 ne vienne recouvrir l'écaille 23 adjacente, comme cela apparaît
clairement sur la figure 4.

De par sa structure comme de par son montage, chaque écaille 23 présente, au niveau de sa partie
plane, une certaine flexibilité dans une direction sensiblement perpendiculaire à la surface du tablier, et
par rapport au support 9 sur lequel elle est montée.

Comme cela apparaît sur les figures 5 et 6,
d'autres formes peuvent être données aux écailles. Sur
la figure 5, l'écaille 23a présente une forme tout-à-fait
rectangulaire, son côté libre 26a étant alors rectiligne.
Sur la figure 6, par contre, le côté libre 26b de l'écaille 23b délimite un V découpé dans la partie rectangulaire
de l'écaille 23b le long de l'un de ses grands côtés.

Dans ces trois formes de réalisation des
écailles 23, il faut remarquer que le support 9 reste
identique. Il en est de même du mode de fixation des
écailles sur leur support.

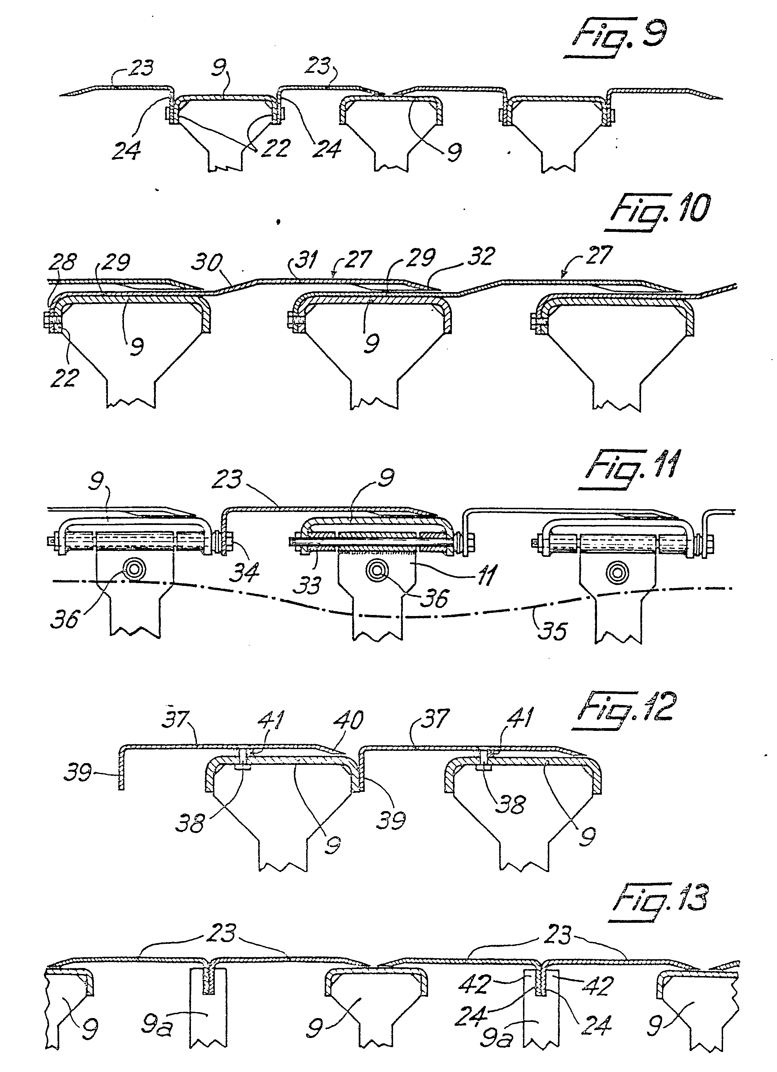

Sur les figures 7 et 8, l'évolution des recouvrements des supports 9 par les écailles 23a ou 23b apparaît clairement.

On peut donner toutes formes souhaitables
au bord libre de l'écaille 23, pourvu qu'il soit compris
dans le losange déterminé par le bord 26 de la découpe
en V montré sur la figure 6, et le bord 26 de l'extension
en V montré sur la figure 3.

Dans tous les cas, la surface pratiquement
continue du tablier de transport est définie par les
écailles 23 et les supports 9 qu'elles recouvrent partiellement et selon des surfaces variables.

Dans un second exemple de réalisation, représenté sur la figure 9, deux écailles, dont la forme est
celle de l'écaille 23 de la figure 2, mais qui pourrait
être semblable aux écailles 23a et 23b des figures 5 et 6,

sont montées en porte-à-faux de part et d'autre d'un support 9 commun, choisi tous les deux supports pris à la suite sur le convoyeur, et avec ou sans plot ou bande élastique pour assurer une liaison souple, selon que les écailles 23 ne sont pas ou sont au contraire par elles-mêmes suffisamment souples ou flexibles.

De ce fait, deux écailles 23, venant en vis-à-vis l'une de l'autre et non portées par le même support 9, recouvrent partiellement et chacune selon une surface variable, un support 9, faisant office de butée plane limitant la flexion des écailles 23 sous le poids des bagages et colis transportés, ces butées participant à la définition de la surface d'entraînement du tablier de transport et étant intercalées entre deux supports 9 portant chacun une paire d'écailles 23.

Dans un troisième exemple de réalisation, représenté sur la figure 10, chaque écaille 27 est liée à son support 9 par l'une de ses extrémités transversales rabattues 28, rattachée à un bord rabattu 22 du support 9. L'écaille 27 présente une partie d'appui 29, par laquelle elle repose sur son support 9, et qui se rattache par une partie coudée ou cintrée 30 à une partie 31 recouvrant partiellement et selon une surface variable la partie d'appui 29 de l'écaille 27 adjacente, vers laquelle le bord libre 32 de l'écaille 27 considérée est recourbé. La souplesse de montage des écailles 27 résulte, dans cette configuration, d'une part de leur flexibilité propre et d'autre part de la présence d'une partie cintrée 30.

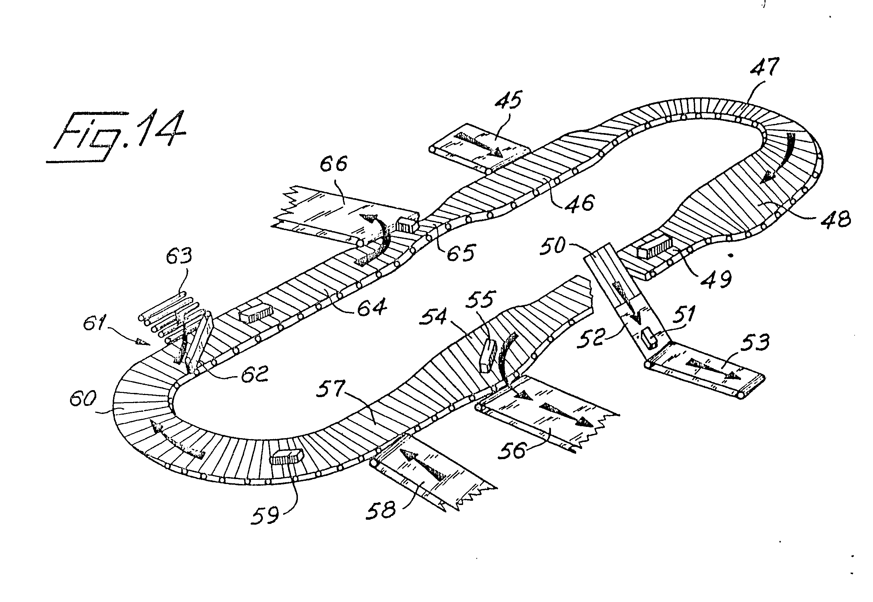

Dans un quatrième exemple de réalisation, représenté sur la figure 11, chaque support 9 est monté tourillonnant sur son porte support 11, autour d'un axe longitudinal médian 33 (également visible sur la figure 1).

De même, l'écaille 23, qui recouvre selon une surface variable chacun de ces supports 9 et qui est retenue en porte-à-faux sur un support 9 adjacent, est montée en rotation sur ce support adjacent 9 autour d'un axe longitudinal et médian 34, venant dans le prolongement de l'axe 33, et faisant partie de l'unique assemblage de liaison de l'écaille 23 à son support 9. De la sorte, chaque écaille 23 peut basculer latéralement avec le support 9 qu'elle recouvre selon une surface variable, les pattes latérales 8 dont sont munis les supports 9 étant éventuellement articulées autour d'un axe longitudinal schématiquement représenté sur la figure 1.

Des basculements sélectifs, tant en ce qui concerne la zone où ils peuvent se produire le long du trajet du convoyeur, qu'en ce qui concerne le nombre d'écailles et de supports basculés, peuvent être obtenus à l'aide d'au moins une rampe 35 (représentée schématiquement) continue ou présentant, de façon en soi connue, des aiguillages, et disposée sur les côtés ou en-dessous du tablier de transport, cette rampe 35 coopèrant avec des galets de basculement 36 portés par les supports 9. La commande de tels basculements latéraux procure, dans des portions horizontales du convoyeur, des possibilités supplémentaires de tri des colis et de présentation des bagages transportés par le convoyeur.

Dans un cinquième exemple de réalisation, représenté sur la figure 12, chacun des supports 9 de la suite de palettes est recouvert partiellement et selon une surface variable par une écaille 37 qui est portée par ce même support 9. L'écaille 37 est montée pivotante sur son support 9 autour d'un axe 38 perpendiculaire au tablier de transport, et monté avec souplesse sur le support 9 grâce à un joint élastique 41 autorisant un débattement angulaire limité, et l'écaille 37 se trouve positionnée par rapport à son support 9 par l'appui d'un support 9 adjacent contre le bord transversal rabattu 39 de l'écaille 37, dont l'autre bord transversal 40 est recourbé vers la surface du support 9 de cette écaille 37.

11

Le sixième exemple, représenté sur la figu-re 13, correspond au second exemple (figure 9) dans la mesure où deux écailles, telles que l'écaille 23 de la figure 3, sont montées en porte-à-faux de part et d'autre d'un support 9a commun. Mais ce support 9a n'est pas identique au support 9, dont les extrémités transversales repliées 22 sont reliées avec ou sans plot ou bande élastique, aux extrémités transversales repliées 24 des écailles 23 de la figure 9; car, dans ce sixième exemple, les deux écailles 23 sont maintenues l'une contre l'autre par leurs extrémités transversales 24 par pincement de ces extrémités 24 entre deux mors transversaux 42 du support 9a entraîné par la chaîne. Par contre, chaque support recouvert partiellement et selon une surface variable par chacune de deux écailles 23 venant en vis-à-vis l'une de l'autre et non portées par le même support 9a, est un support 9 faisant office de butée plane limitant la flexion des écailles 23 et participant à la définition de la surface d'entraînement du tablier de transport. Dans la suite de palettes, les supports 9a sont intercalés avec les supports 9.

Il est clair que la forme en plan des écailles 37 peut être semblable à celle des écailles 23, 23a et 23b représentées sur les figures 4 à 6.

En ce qui concerne le quatrième exemple de réalisation, il est clair que les pattes latérales 8 peuvent être rigidement liées, par soudage par exemple, aux supports 9, et non articulés sur ces derniers, les rails 5 et 6 étant dans ce cas inclinés ou vrillés de façon correspondante pour que les galets 7 suivent bien les chemins de roulement qu'ils définissent.

Dans les cas où chaque support 9 est rigidement lié au porte-support 11 correspondant, et non articulé sur ce dernier autour d'un axe tel que 33 sur la figure 1, le convoyeur selon l'invention peut présenter un tablier de transport 20 soit entièrement plat soit entièrement incliné. Cependant, comme déjà expliqué ci-dessus, l'utilisation d'une chaîne à cardans 10 comme moyen de traction des porte-supports 11 permet, dans des zones déterminées, soit d'incliner une partie de tablier de transport 20 par ailleurs plat, soit, inversement, de ramener dans un plan horizontal une partie d'un tablier de transport 20 par ailleurs incliné.

Dans le cas où chaque support 9 est articulé autour d'un axe 33, sur le porte-support correspondant, le tablier de transport 20 peut non seulement adopter les configurations présentées au paragraphe précédent, mais il est de plus possible, dans une zone fixée sur le trajet du convoyeur, de basculer sélectivement ou systématiquement une ou de préférence plusieurs écailles, telles que 23, pour remplir des fonctions de tri, de déchargement ou d'aide au chargement ou au déchargement systématique des colis et bagages.

Un tel circuit complet de convoyeur, comportant des parties horizontales et des parties inclinées, est représenté sur la figure 14. En face d'un poste d'injection 45, permettant un chargement automatique ou manuel de colis et bagages sur le tablier de transport 20, ce dernier présente une zone horizontale rectiligne 46, se prolongeant, dans le sens de déplacement du convoyeur, par une zone courbe inclinée 47, assurant une bonne présentation des colis et bagages, et facilitant des opérations de déchargement ou de tri manuel des colis ou bagages retenus, le long du bord inférieur de la zone inclinée 47 du tablier 20, par une rive fixe ou mobile. A la sortie de la zone courbe inclinée 47, le tablier présente une zone rectiligne inclinée 48 puis une zone horizontale 49, dans laquelle un groupe de quatre écailles consécutives 50 peut être sélectivement basculé, d'un côté et/ou de l'autre du convoyeur, pour assurer le tri de colis ou bagages tels que 51, évacué par une rampe inclinée telle que 52 et un transporteur de tri tel que 53. Le tablier de transport présente ensuite une nouvelle zone rectiligne inclinée 54 pour assurer le déchargement systématique de colis tels que 55 sur un autre transporteur 56. En aval de cette zone inclinée 54, se trouve une nouvelle zone horizontale 57, analogue à la zone 46 et également adjacente à un poste d'injection 58 analogue au poste 45, pour le chargement de colis tels que 59, dirigés par une zone courbe horizontale 60 du tablier de transport, assurant une fonction de présentation, vers un poste d'éjection 61, équipé d'un bras déviateur 62, avec ou sans écharpe, ou de tout autre système annexe convenable d'éjection, déviant sélectivement les colis vers le transporteur d'éjection 63. Le tablier de transport présente ensuite une zone horizontale et rectiligne 64, se raccordant à la zone de même nature 46 par une zone rectiligne inclinée 65, analogue à la zone 54, pour le déchargement systématique des colis sur le transporteur 66.

L'invention n'est pas limitée aux seuls modes de réalisation décrits de convoyeurs pouvant être avantageusement utilisés pour assurer la manutention et/ou le tri de colis et bagages dans les gares et aéroports notamment, mais, elle s'étend, au contraire, aux convoyeurs qui ne se différencient de ceux décrits que par des moyens mécaniques équivalents.

14

REVENDICATIONS DE BREVET .

1. Convoyeur de manutention et/ou de tri de colis et bagages, comprenant une suite continue de palettes, entraînée par des moyens de traction tels qu'une chaîne. (10), équipés de moyens de guidage (16,17) des palettes sur un bâti, chaque palette comprenant au moins une écaille (23, 23a, 23b, 27,37) montée sur un support (9), lequel est lié aux moyens de traction (10), articulé par rapport aux supports (9) adjacents, et muni de moyens de déplacement (8) de la palette correspondante sur le bâti, de sorte que le convoyeur présente un tablier de transport (20) horizontal ou incliné susceptible de présenter des courbes au moins dans un plan horizontal, et constitué par un recouvrement partiel et selon des surfaces variables des écailles (23, 23a,23b, 27,37) et supports (9), pour définir une surface continue et mobile d'entraînement des colis et bagages, caractérisé en ce que chaque écaille (23,23a,23b,27,37) est realisée en un matériau rigide et comprend au moins une partie sensiblement plane présentant une certaine flexibilité, par rapport au support (9) sur lequel elle est montée, dans une direction sensiblement perpendiculaire à la surface du tablier (20) chaque écaille (23,23a,23b,27,37) ne recouvrant partiellement et selon une surface variable qu'un seul support (9), avec sa partie sensiblement plane.

2. Convoyeur selon la revendication 1, caractérisé en ce que le bord libre (26,26a,26b,40) de l'écaille (23,23a,23b, 27,37) ou de la partie d'écaille, recouvrant partiellement et selon une surface variable le support (9) correspondant reste sur toute la largeur du tablier (20), et pour toute position de l'écaille (23,23a,23b,27,37)par rapport à ce support (9) à l'aplomb de ce dernier, sans venir recouvrir une écaille (23,23a,23b,27,37) adjacente.

3.Convoyeur selon l'une des revendications 1 et 2, caractérisé en ce que chaque support (9) recouvert partiellement et selon une surface variable par au moins une écaille (23,27) est un support (9) adjacent au(x) support(s) (9) portant cette ou ces écailles (23,27).

4. Convoyeur selon la revendication 3, caractérisé en ce que chaque écaille (23,27) est montée, en porte-à-faux sur son support (9) par une liaison de l'une de ses extrémités transversales (24, 28), par rapport au tablier de transport (20), à une extrémité transversale (22) de son support (9).

5. Convoyeur, selon la revendication 4, caractérisé en ce que deux écailles (23) sont disposées en porte-à-faux de part et d'autre d'un support (9) sur deux, pris à la suite sur le convoyeur.

6. Convoyeur selon la revendication 5, caractérisé en ce que deux écailles (23) en vis-à-vis, non portées par le même support (9) recouvrant partiellement et selon une surface variable des butées planes, participent à la définition du tablier de transport (20), contre lesquelles les écailles (23) sont susceptibles de prendre appui, et avantageusement constituées sous la forme de supports (9).

7. Convoyeur selon l'une des revendications 4 à 6, caractérisé en ce que la liaison entre une écaille (23) et son support (9) est souple.

8. Convoyeur selon la revendication 7, caractérisé en ce que la liaison souple est réalisée au moyen d'au moins un plot (27) ou une bande élastique interposé(e) entre les extrémités transversales(24,22) du support (9) et de l'écaille (23) lesquelles sont recourbées sous le tablier de transport (20) et serrées l'une vers l'autre par des moyens de fixation.

9. Convoyeur selon la revendication 4, caractérisé en ce que chaque écaille (27) prend appui sur son support (9) par une partie (29) voisine de son extrémité transversale (28) par laquelle l'écaille (27) est liée à son support (9),cette partie d'appui (29) fixe par rapport au support (9) de l'écaille (27), se rattachant par une partie coudée (30) à la partie (31) d'écaille recouvrant partiellement et selon une surface variable la partie d'appui (29) d'une écaille (27) adjacente.

10. Convoyeur selon la revendication 4, caractérisé en ce que chaque support (9) est monté tourillonnant autour d'un axe longitudinal médian (33) sur un porte-support (11)

entraîné par les moyens de traction (10),et en.ce que chaque écaille (23) est montée en rotation sur son support (9) autour d'un axe longitudinal médian (34) dans le prolongement de l'axe (33) du tourillon du support (9) qu'elle recouvre partiellement et selon une surface variable pour pouvoir basculer latéralement avec ce dernier.

11. Convoyeur selon la revendication 10, caractérisé en.ce que les basculements latéraux d'au moins un support (9) sont commandés, par une rampe (35) à profil continu ou comportant des aiguillages, ménagée sur au moins l'un des côtés ou au dessous du tablier de transport (20) et sur laquelle roulent des galets de basculement (36) solidaires des supports (9).

12. Convoyeur selon l'une des revendications 1 et 2, caractérisé en ce que chaque support (9) recouvert partiellement et selon une surface variable par une écaille (37) est le support (9) de cette écaille (37).

13. Convoyeur selon la revendication 12, caractérisé en ce que chaque écaille (37) est montée pivotante sur son support (9) autour d'un axe (38) perpendiculaire au tablier de transport (20), et se trouve positionnée par rapport à son support (9) par un support (9) adjacent à ce dernier.

14. Convoyeur selon l'une des revendications 1 à 13, caractérisé en ce que chaque écaille (23a) est de forme en plan rectangulaire.

15. Convoyeur selon l'une des revendications 1 à 13, caractérisé en ce que chaque écaille (23b) est de forme en plan rectangulaire présentant une découpe en V vers l'intérieur de l'un de ses grands côtés correspondant à la largeur du tablier de transport (20).

16. Convoyeur selon l'une des revendications 1 à 13, caractérisé en ce que chaque écaille (23) est de forme en plan rectangulaire présentant une extension en V vers l'extérieur de l'un de ses grands côtés.

17. Convoyeur selon l'une des revendications 1 à 16, caractérisé en ce que les moyens de traction (10) sont constitués par une chaîne à cardans (14) permettant au tablier de transport (20) lui même horizontal ou incliné dans le plan perpendiculaire à son déplacement de s'élever et de descendre et/ou de s'incliner et/ou de se courber dans un plan horizontal ou incliné, ou selon une surface sensiblement conique.

_Fig.1_

_Fig.2_

_Fig.3_

_Fig.5_

_Fig.4_

*Fig.6*

23b

9

26b

*Fig.7*

9

23a

23a

26a

23a

9

23a

*Fig.8*

9

23b

26b

9    23b    9

23b

*Fig. 9*

*Fig. 10*

*Fig. 11*

*Fig. 12*

*Fig. 13*

Fig.14

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| X | US - A - 3 881 592 (STANRAY CORP.)<br>* Colonne 4, lignes 3-57; figures 2,8-11 * | 1,3,4, 7,8,9, 12 |
| | -- | |
| X | FR - A - 2 231 588 (REXNORD)<br>* Page 6, lignes 10-39; page 7, lignes 1-21; figures 9-11 * | 1,3,4 |
| | -- | |
| A | US - A - 3 627 109 (CABAK)<br>* Colonne 3, lignes 1-38; figures 1,3, 6 * | 15,16 |
| | -- | |
| A | FR - A - 1 561 133 (SENYO KOGYO)<br>* En entier * | 17 |
| | -- | |
| DA | FR - A - 2 199 519 (TISSMETAL) | |
| | ---- | |

**DOCUMENTS CONSIDERES COMME PERTINENTS**

**CLASSEMENT DE LA DEMANDE (Int. Cl. 3)**

B 65 G 17/06

**DOMAINES TECHNIQUES RECHERCHES (Int. Cl. 3)**

B 65 G

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe a la base de l'invention
E: document de brevet antérieur, mais publié à la date de dépôt ou apres cette date
D: cité dans la demande
L: cité pour d'autres raisons

&: membre de la même famille, document correspondant

Le present rapport de recherche a eté etabli pour toutes les revendications

| Lieu de la recherche | Date d'achevement de la recherche | Examinateur |
|---|---|---|
| La Haye | 01-04-1982 | OSTIJN |

OEB Form 1503.1   06.78